# EUROPEAN PATENT APPLICATION

(11) **EP 4 152 547 A1**
(43) Date of publication of application: **22.03.2023**
(21) Application number: 22190242.2
(22) Date of filing: 12.08.2022
(51) Int. Cl.: H02J 3/32, H02J 3/38, H02J 7/00, H02J 13/00

(54) **ENERGY STORAGE SYSTEM**

(30) Priority: 16.09.2021 CN 202111085638
(71) Applicant: DELTA ELECTRONICS (SHANGHAI) CO., LTD, Shanghai 201209 (CN)
(72) Inventor: Guan, Wei, Shanghai 201209 (CN); Gao, Zhiguang, Shanghai 201209 (CN); Chen, Jun, Shanghai 201209 (CN); Lu, Yansong, Shanghai 201209 (CN); Wang, Changyong, Shanghai 201209 (CN)
(74) Representative: Uexküll & Stolberg

(57) **Abstract**

An energy storage system (1) is provided. The energy storage system (1) includes a plurality of battery clusters (11), a plurality of power regulators (12), a transformer (13), and a central controller (14). The plurality of power regulators (12) is configured to control charging and discharging of the plurality of battery clusters (11). Each power regulator (12) is electrically coupled to corresponding two, at most, of the plurality of battery clusters (11). A first terminal of the transformer (13) is electrically coupled to the plurality of power regulators (12), and a second terminal of the transformer (13) is electrically coupled to the power grid (2). The central controller (14) is coupled to the plurality of power regulators (12) and the plurality of battery clusters (11) for controlling the plurality of power regulators (12) and the plurality of battery clusters (11). The central controller (14) is in communication with the plurality of power regulators (12) through optical fibers, and a data transmission rate of the optical fibers is greater than IMbit/s.

## Description

### FIELD OF THE INVENTION

The present disclosure relates to the field of power electronics technology, and more particularly to an energy storage system.

### BACKGROUND OF THE INVENTION

With the development of science and technology, the demand for energy is increasing. In order to reduce carbon emissions as much as possible while meeting the requirement for energy, the renewable energy sources, such as wind power and photovoltaic power, need to be widely used. However, the renewable energy has the characteristic of unstable output. For example, when the wind is weak or when there is lack of sunlight, the corresponding wind power or photovoltaic power cannot be generated to output energy stably. In order to prevent the unstable output of renewable energy from affecting the safe operation of the power grid, an energy storage system is required to perform peak and frequency modulation on the power grid for stabilizing the power grid.

In conventional energy storage systems, generally, plural sets of battery clusters are connected in parallel, and a single high-power power conditioning converter converts the DC power provided by the battery clusters into AC power, and then the AC power is incorporated into the power grid. However, when the plural sets of battery clusters are connected in parallel, the unequal internal resistances or characteristics of the batteries in the battery clusters would cause problems such as the circulation between the battery clusters, the failure of sufficiently using the battery capacity, and the excessive short-circuit current of the battery. Further, the usable capacity, the safety in use, the service life, and the efficiency of the entire energy storage system may be affected.

Therefore, there is a need of providing an energy storage system in order to overcome the drawbacks of the conventional technologies.

### SUMMARY OF THE INVENTION

The present disclosure provides an energy storage system. In the energy storage system, each power regulator is electrically coupled to at most two battery clusters. Accordingly, the problems like the circulation between the battery clusters, the failure of sufficiently using the battery capacity, and the excessive short-circuit current of the battery, which are caused by connecting too many battery clusters in parallel, are avoided. Therefore, the usable capacity, the safety in use, the service life, and the efficiency of the energy storage system are improved. Meanwhile, compared with the architecture of the conventional energy storage system, the present disclosure replaces the single high-power power regulator by multiple low-power power regulators, which is beneficial to the modularization and extensibility for the energy storage system. In addition, the central controller is in communication with each power regulator through optical fibers. By the high data transmission rate of optical fibers, the communication delay is reduced effectively to be controlled in µs level. Consequently, the whole response speed of the energy storage system is improved, and the response time is reduced.

In accordance with an aspect of the present disclosure, an energy storage system is provided. The energy storage system includes a plurality of battery clusters, a plurality of power regulators, a transformer, and a central controller. The plurality of power regulators is configured to control the charging and discharging of the plurality of battery clusters. Each power regulator is electrically coupled to corresponding two, at most, of the plurality of battery clusters. A first terminal of the transformer is electrically coupled to the plurality of power regulators, and a second terminal of the transformer is electrically coupled to the power grid. The central controller is coupled to the plurality of power regulators and the plurality of battery clusters for controlling the plurality of power regulators and the plurality of battery clusters. The central controller is in communication with the plurality of power regulators through optical fibers, and a data transmission rate of the optical fibers is greater than IMbit/s.

The above contents of the present disclosure will become more readily apparent to those ordinarily skilled in the art after reviewing the following detailed description and accompanying drawings, in which:

### BRIEF DESCRIPTION OF THE DRAWINGS

FIG. 1 is a schematic block diagram illustrating an energy storage system according to a first embodiment of the present disclosure;
FIG. 2 is a schematic block diagram illustrating an energy storage system according to a second embodiment of the present disclosure; and
FIG. 3 is a schematic block diagram illustrating an energy storage system according to a third embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

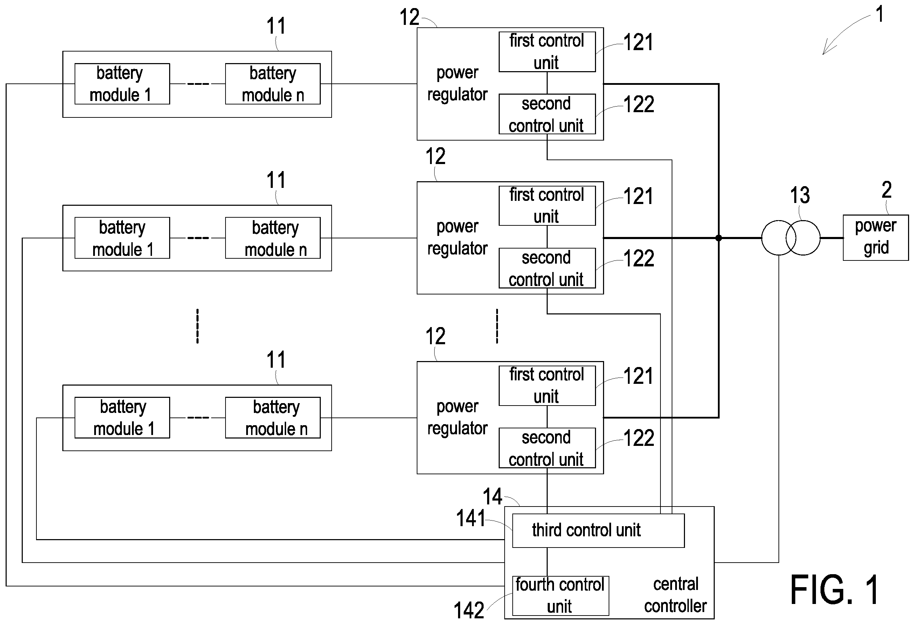

FIG. 1 is a schematic block diagram illustrating an energy storage system according to a first embodiment of the present disclosure. As shown in FIG. 1, the energy storage system 1 of the present disclosure is electrically connected to a power grid 2, and includes a plurality of battery clusters 11, a plurality of power regulators 12, a transformer 13, and a central controller 14. The energy storage system 1 may receive electric energy from the power grid 2, and the received electric energy is converted by the transformer 13 and then is stored in each battery cluster 11. Alternatively, the energy storage system 1 may receive electric energy from the plurality of battery clusters 11, and the received electric energy is converted by the transformer 13 and then is outputted to the power grid 2. Consequently, the power grid 2 is stabilized. In addition, the energy storage system 1 further realizes the functions like the peak and frequency modulation and the dynamic voltage supporting on the power grid 2 through the power regulators 12.

The plurality of power regulators 12 is configured to control the charging and discharging of the plurality of battery clusters 11, and each power regulator 12 is electrically coupled to the corresponding two battery clusters 11 at most. Each power regulator 12 is electrically coupled to the corresponding one battery cluster 11 in this embodiment, but not limited thereto. In another embodiment, each power regulator 12 may be electrically coupled to the corresponding two battery clusters 11. It is noted that the voltage of each battery cluster 11 is regulated by the corresponding power regulator 12, and the voltages of the battery clusters 11 coupled to different power regulators 12 would not affect each other. In other words, the voltages of the battery clusters 11 coupled to different power regulators 12 may be equal or unequal. Therefore, the compatibility of the energy storage system 1 is enhanced.

In an embodiment, each battery cluster 11 includes a plurality of battery modules (battery module 1, ..., battery module n) electrically connected to each other in series or in parallel, where n is an integer greater than 1. Each battery module may include a plurality of batteries. In addition, the type of the batteries in the battery cluster 11 is for example but not limited to lithium batteries, lead-acid batteries, or nickel-based batteries. Further, different battery clusters 11 may use the same type of batteries or the different types of batteries, which is not limited.

The first terminal of the transformer 13 is electrically coupled to all the power regulators 12. In specific, the AC terminals of all the power regulators 12 are connected to each other in parallel, and then are electrically coupled to the first terminal of the transformer 13. The second terminal of the transformer 13 is electrically coupled to the power grid 2. The first and the second terminals of the transformer 13 may be the primary and secondary sides of the transformer 13 respectively. Alternatively, the first and the second terminals of the transformer 13 may be the secondary and primary sides of the transformer 13 respectively.

The central controller 14 is coupled to all the power regulators 12 and all the battery clusters 11 for controlling all the power regulators 12 and all the battery clusters 11. Moreover, in order to minimize the influence of the communication delay on the response speed of the energy storage system 1, the central controller 14 is in communication with each power regulator 12 through optical fibers, and the data transmission rate of optical fibers is greater than 1 Mbit/s.

Each power regulator 12 is electrically coupled to at most two battery clusters 11. Accordingly, the problems like the circulation between the battery clusters, the failure of sufficiently using the battery capacity, and the excessive short-circuit current of the battery, which are caused by connecting too many battery clusters 11 in parallel, are avoided. Therefore, the usable capacity, the safety in use, the service life, and the efficiency of the energy storage system 1 are improved. In addition, the central controller 14 is in communication with each power regulator 12 through optical fibers. By the high data transmission rate of optical fibers, the communication delay is reduced effectively, and the whole power response time of the energy storage system 1 is reduced.

In an embodiment, each power regulator 12 includes a first control unit 121 and a second control unit 122. The first control unit 121 is configured to perform the control algorithm, the operation logic management, and the collection and recording of internal operation data inside the power regulator 12. The second control unit 122 is in communication with the first control unit 121 and the central controller 14, and is configured to process the protection logic, perform the signal conversion, and receive and output optical fiber signals. In each power regulator 12, the first control unit 121 transmits the operation data of the power regulator 12 to the second control unit 122, and the second control unit 122 converts the operation data into a first optical fiber signal and transmits the first optical fiber signal to the central controller 14 through optical fibers. Further, the central controller 14 generates a control command and converts the control command into a second optical fiber signal. The second control unit 122 receives the second optical fiber signal from the central controller 14 through optical fibers, converts the second optical fiber signal into the control command, and transmits the control command to the first control unit 121. The first control unit 121 controls the corresponding power regulator 12 according to the control command. In an embodiment, the first control unit 121 and the second control unit 122 in the same power regulator 12 communicate with each other through parallel communication, and the data transmission rate of the parallel communication is greater than 1 Mbit/s.

In an embodiment, the central controller 14 includes a third control unit 141 and a fourth control unit 142. The fourth control unit 142 is configured to collect the operation data of all the power regulators 12 and generate the control command for each power regulator 12. The third control unit 141 is in communication with the fourth control unit 142 and the second control units 122 of all the power regulators 12, and is configured to perform the signal conversion and receive and output optical fiber signals. In the central controller 14 and each power regulator 12, the third control unit 141 receives the first optical fiber signal from the second control unit 122 through optical fibers, converts the first optical fiber signal into the operation data of the power regulator 12, and transmits the operation data of the power regulator 12 to the fourth control unit 142. Further, the fourth control unit 142 generates a control command and transmits the control command to the third control unit 141. The third control unit 141 converts the control command into the second optical fiber signal and transmits the second optical fiber signal to the second control unit 122 through optical fibers. In an embodiment, the third control unit 141 and the fourth control unit 142 in the same central controller 14 communicate with each other through parallel communication, and the data transmission rate of the parallel communication is greater than 1 Mbit/s.

In addition, in an embodiment, the central controller 14 may communicate with each battery cluster 11, and the power regulator 12 may communicate with the corresponding battery cluster 11. In particular, the communication may be realized through optical fiber, CAN (controller area network), or LIN (local interconnect network), but not exclusively.

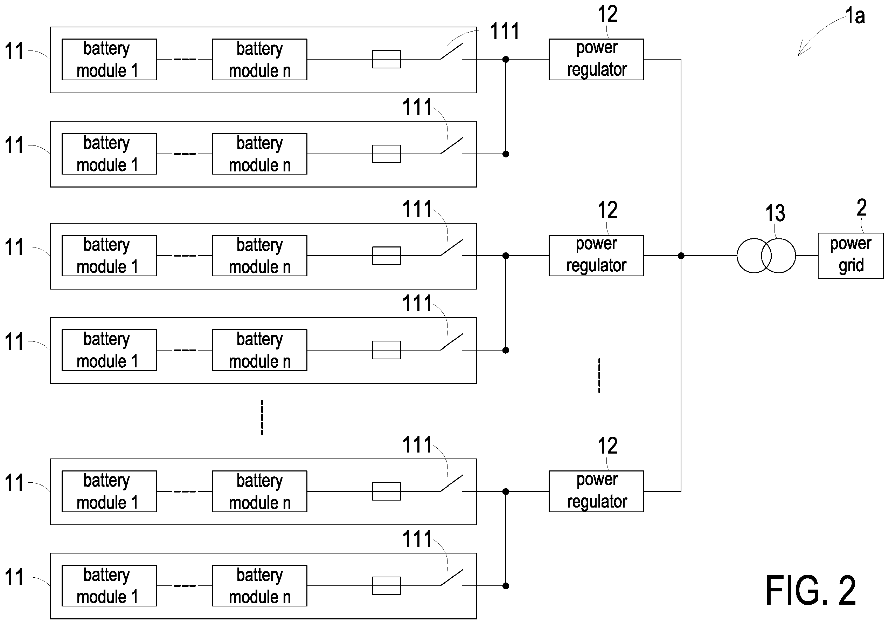

FIG. 2 is a schematic block diagram illustrating an energy storage system according to a second embodiment of the present disclosure. In FIG. 1 and FIG. 2, the elements with the same structure and function are designated by identical numeral references, and thus the detailed descriptions thereof are omitted herein. Compared with the energy storage system 1 of FIG. 1, in the embodiment shown in FIG. 2, each power regulator 12 of the energy storage system 1a is electrically coupled to the corresponding two battery clusters 11. Each power regulator 12 has two DC ports electrically coupled to the corresponding two battery clusters 11 respectively. Furthermore, each battery cluster 11 further includes a protection switch 111 electrically connected between the plurality of battery modules of the battery cluster 11 and the corresponding power regulator 12. The protection switch 111 has the function of overcurrent protection, which can cut off the circuit for realizing protection when the current flowing therethrough exceeds a preset value. The protection switch 111 is for example but not limited to a circuit breaker, a combination of a fuse and an isolated switch, or a combination of a fuse and a contactor. Therefore, there is no need to dispose a DC protection switch at the conjunction point of the battery clusters 11, which saves the cost.

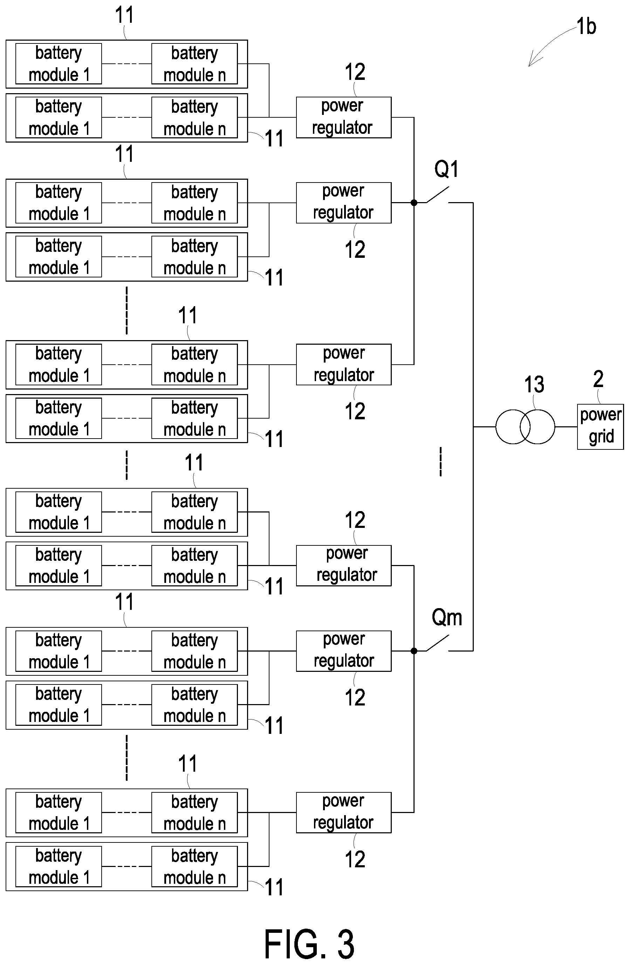

FIG. 3 is a schematic block diagram illustrating an energy storage system according to a third embodiment of the present disclosure. In FIGs. 1-3, the elements with the same structure and function are designated by identical numeral references, and thus the detailed descriptions thereof are omitted herein. Compared with the energy storage systems 1 and 1a of FIG. 1 and FIG. 2, in the embodiment shown in FIG. 3, the energy storage system 1b further includes at least one AC switch Q1,..., Qm. The first terminal of each AC switch Q1,..., Qm is electrically coupled to the corresponding plural power regulators 12. The second terminal of each AC switch Q1,..., Qm is electrically coupled to the first terminal of the transformer 13. The number of the power regulators 12 electrically coupled to each AC switch Q1,..., Qm may be equal or unequal, and is not limited. As exemplified in FIG. 3, the number of the power regulators 12 electrically coupled to the AC switch Q1 may be equal or unequal to the number of the power regulators 12 electrically coupled to the AC switch Qm, which is not limited, and m is an integer greater than 1. The AC switch Q1,..., Qm is for example but not limited to a circuit breaker, a combination of a fuse and an isolated switch, or a combination of a fuse and a contactor.

In the conventional energy storage system, each power regulator is provided with one corresponding AC switch. In the energy storage system 1b of the present disclosure, plural power regulators 12 share one AC switch, thereby reducing the number of AC switches and saving the cost for hardware. Further, as the number of AC switches decreases, the time of operating the AC switches during on-site maintenance is also reduced, thereby saving the time and labor cost of the on-site maintenance.

It is noted that the protection switch and the AC switch of the energy storage system of the present disclosure are shown in FIG. 2 and FIG. 3 respectively in above descriptions for ease of description and understanding. In fact, the energy storage system of the present disclosure may include the protection switches 111 and the AC switches Q1,..., Qm shown in FIG. 2 and FIG. 3 at the same time. In addition, in order to keep the drawings concise, the central controller 14 and each control unit in FIG. 1 are not repeatedly shown in FIGs. 2 and 3.

In summary, the present disclosure provides an energy storage system. In the energy storage system, each power regulator is electrically coupled to two battery clusters at most. Accordingly, the problems like the circulation between the battery clusters, the failure of sufficiently using the battery capacity, and the excessive short-circuit current of the battery, which are caused by connecting too many battery clusters in parallel, are avoided. Therefore, the usable capacity, the safety in use, the service life, and the efficiency of the energy storage system are improved. Meanwhile, compared with the architecture of the conventional energy storage system, the present disclosure replaces the single high-power power regulator by multiple low-power power regulators, which is beneficial to the modularization and extensibility for the energy storage system. In addition, the central controller is in communication with each power regulator through optical fibers. By the high data transmission rate of optical fibers, the communication delay is reduced effectively to be controlled in µs level. Consequently, the whole response speed of the energy storage system is improved, and the response time is reduced. Moreover, since each battery cluster includes a protection switch with the function of overcurrent protection, there is no need to dispose a DC protection switch at the conjunction point of the battery clusters, which saves the cost. Furthermore, plural power regulators share one AC switch, thereby reducing the number of AC switches and saving the cost for hardware and the time and labor cost of the on-site maintenance.

## Claims

1. An energy storage system (1), electrically connected to a power grid (2), and **characterized by** comprising:
a plurality of battery clusters (11);
a plurality of power regulators (12), configured to control the charging and discharging of the plurality of battery clusters (11), wherein each of the plurality of power regulators (12) is electrically coupled to corresponding two, at most, of the plurality of battery clusters (11);
a transformer (13), wherein a first terminal of the transformer (13) is electrically coupled to the plurality of power regulators (12), and a second terminal of the transformer (13) is electrically coupled to the power grid (2); and
a central controller (14), coupled to the plurality of power regulators (12) and the plurality of battery clusters (11) for controlling the plurality of power regulators (12) and the plurality of battery clusters (11), wherein the central controller (14) is in communication with the plurality of power regulators (12) through optical fibers, and a data transmission rate of the optical fibers is greater than IMbit/s.

2. The energy storage system (1) according to claim 1, wherein each of the plurality of power regulators (12) comprises a first control unit (121) and a second control unit (122), in each of the plurality of power regulators (12), the first control unit (121) transmits an operation data of the power regulator (12) to the second control unit (122), the second control unit (122) converts the operation data into a first optical fiber signal and transmits the first optical fiber signal to the central controller (14) through the optical fibers; the central controller (14) generates a control command and converts the control command into a second optical fiber signal, the second control unit (122) receives the second optical fiber signal from the central controller (14) through the optical fibers, converts the second optical fiber signal into the control command, and transmits the control command to the first control unit (121), and the first control unit (121) controls the power regulator (12) according to the control command.

3. The energy storage system (1) according to claim 2, wherein in each of the plurality of power regulators (12), the first control unit (121) and the second control unit (122) communicate with each other through parallel communication, and a data transmission rate of the parallel communication is greater than 1 Mbit/s.

4. The energy storage system (1) according to claim 2, wherein the central controller (14) comprises a third control unit (141) and a fourth control unit (142), in the central controller (14) and each of the plurality of power regulators (12), the third control unit (141) receives the first optical fiber signal from the second control unit (122) through the optical fibers, converts the first optical fiber signal into the operation data, and transmits the operation data to the fourth control unit (142); the fourth control unit (142) generates the control command and transmits the control command to the third control unit (141), and the third control unit (141) converts the control command into the second optical fiber signal and transmits the second optical fiber signal to the second control unit (122) through the optical fibers.

5. The energy storage system (1) according to claim 4, wherein the third control unit (141) and the fourth control unit (142) of the central controller (14) communicate with each other through parallel communication, and a data transmission rate of the parallel communication is greater than 1 Mbit/s.

6. The energy storage system (1) according to claim 1, wherein each of the plurality of battery clusters (11) comprises a plurality of battery modules electrically connected in series or in parallel.

7. The energy storage system (1) according to claim 1, wherein each of the plurality of power regulators (12) is electrically coupled to a corresponding battery cluster (11).

8. The energy storage system (1) according to claim 1, wherein voltages on the plurality of battery clusters (11) are not totally equal.

9. The energy storage system (1a) according to claim 1, wherein each of the plurality of power regulators (12) is electrically coupled to two corresponding battery clusters (11) and has two DC ports, and the two DC ports are electrically coupled to the two corresponding battery clusters (11) respectively.

10. The energy storage system (1a) according to claim 9, wherein each of the plurality of battery clusters (11) further comprises a protection switch (111) electrically connected between a plurality of battery modules of the battery cluster (11) and the corresponding power regulator (12), and the protection switch (111) has function of overcurrent protection.

11. The energy storage system (1b) according to claim 1, further comprising at least one AC switch (Q1), wherein a first terminal of the AC switch (Q1) is electrically coupled to corresponding power regulators (12), and a second terminal of the AC switch (Q1) is electrically coupled to the first terminal of the transformer (13).

12. The energy storage system (1b) according to claim 11, wherein the energy storage system (1b) comprises a plurality of the AC switches (Q1, Qm), and the number of the power regulators (12) coupled to the plurality of AC switches (Q1, Qm) respectively are not the same.

13. The energy storage system (1) according to claim 1, wherein a type of batteries in at least one battery cluster (11) is unequal to a type of batteries in the other battery clusters (11).
